Europäisches Patentamt

(19) European Patent Office

Office européen des brevets

(11) Publication number: **0 057 804**

**A2**

(12) **EUROPEAN PATENT APPLICATION**

(21) Application number: **81810466.3**

(22) Date of filing: **20.11.81**

(51) Int. Cl.³: **G 01 K 17/16**

(30) Priority: **27.01.81 CH 495/81**

(43) Date of publication of application:
**18.08.82 Bulletin 82/33**

(84) Designated Contracting States:
**AT BE DE FR GB IT LU NL SE**

(71) Applicant: **Barbuti, Ottorino**
**Piazza Riscossa 16**
**CH-6900 Lugano-Cassarate(CH)**

(72) Inventor: **Barbuti, Ottorino**
**Piazza Riscossa 16**
**CH-6900 Lugano-Cassarate(CH)**

(74) Representative: **Baggiolini, Raimondo et al,**
**Racheli & Fiammenghi Via San Gottardo 15**
**CH-6900 Lugano(CH)**

(54) **A dynamic calorimeter for fluids with a self feeding electronic processor insensitive to the flow of external magnetic fields.**

(57) A dynamic calorimeter for fluids constituted by a main body (80) containing a meter of volume of the fluid running in it, by a differential thermic probe of which an incorporated element and an external one (911), by a transformer of these data in current and electric impulses, by a processing electronic station of the data of volume and of difference of temperature and by a displayer of the result with luminous numerals making a single body with meter the whole not exceeding at a minimum the dimensions of a normal hydraulic sluice by 3/4 inch (119 mm). It is described how the electronic part may be fed from the outside (transformer 31) of self fed making use of the kinetic energy of the fluid running in it and how the impulses for the counter may be obtained by means of an oscillator with radio frequency not influenced by external magnetic fields.

FIG.9

Croydon Printing Company Ltd.

A dynamic calorimeter for fluids with a self feeding
electronic processor insensitive to the flow of external
magnetic fields.

Known meters of the calories contained in a fluid in
movement are essentially constituted by a meter of the
volume of the fluid passing through it connected to an
element which multiplies this indication by the level
of temperature at which at every moment the fluid happens
to be.   These are able to total the product of the two
data on an instantaneous analogical or permanent viewer
or with mobile printer or with sliding numbers or by means
of a written diagram.   In the greater number of present
uses the said calorimeters are inserted in a fluid circuit
heated by a generator (boiler) for measuring the quantity
of heat supplied by this to the users.   In this case
the calorimeter must multiply the measure of the volume
of the liquid flowing in it by the difference of
temperature possessed by it between the outlet and the
return to the boiler.

In the present state of technology dynamic calorimeters
are:   either completely mechanical or electromechanical
and electronic.   In mechanical calorimeters the element
constituting the measurer of the flow of the liquid "Q"
is nearly always constituted by a valve, by a fan, by
a screw of different shapes made to rotate in the fluid
in which they are immersed and which transmit by means
of their axis of rotation (directly or by magnetic priming)
their movement to the various toothed wheels of the
mechanical counter carrying visible numbers.   Two heat
gauges are connected mechanically and in counter position
coupling them to the volume measurer so as to transmit
directly the indications of the product $Q \times \Delta T$ on the
counter marked in calories.

These types of meters have the inconvenience of complexity of construction as well as large overall dimensions. In the case of magnetic coupling of the movement their accuracy of measurement may be considerably influenced by magnetic fields induced from outside. In some cases as measure of the volume of the fluid there is used a calibrated passage in the form of a "Venturi tube" making use of the depression obtained in it but the dimensions of the single flow meter are already considerable and its sensitivity rather slight.

The indicator parts of the temperature in all known calorimeters is constituted by two heat gauges which are introduced in suitable pockets inserted in the conductors of the fluid. These elements also as a rule are very cumbersome and require sectioning the tubing in which they are inserted. The gauges are connected with thin tubes to the differential element. In general this category of calorimeter is not very suitable for carrying out measurements in circuits of small capacity and also causes considerable wearing out of the mechanical systems.

Electromechanical calorimeters have as mechanical only the flow meter but this does not transmit motion but electrical impulses in number proportional to the intensity of the flow to an electrical or electronic station which also terminate the two thermal sensors.

This provides for totalling the volume, differentiating the temperatures and carrying out the product of the data making visible the result as amount of calories. The transformation of the number of revolutions of the rotating element in the fluid into electronic impulses are obtained in the majority of cases by means of small permanent magnets integral with the rotor so as not to require any connection either electrical or mechanical between the rotor and the fixed part.    The flow of their magnetic field presented at every rotation or fraction of rotation before the collector induce their instantaneous action. The collector element may be a magnetic micro interrupter in the presence of inert gas, an interrupter with Hall effect or an inductor on ferromagnetic cores.    The magnetic interruptors and the inductors absorb from the rotor a negligible quantity of kinetic energy which is not recovered whilst the interrupters with HALL effect do not absorb any at all.

Under special perception such meters are capable of being influenced by external magnetic fields.    Also the indicators of revolutions being optical micro-sensor (electro luminescent diode LED+ photo transistors) making use of the reflexion of light effected by the blades of the rotor consumes electric current and is capable of being influenced by any turbidity of the flowing luquid.

All these systems have a relative complexity being consituted by four separate elements:   flow meter, impulse generator (or carrier out of interruption of electrical circuits), high temperature gauge, low temperature gauge, electronic calculation and display station which moreover is connected to the electrical energy supply system. These are for the most part suitable for industrial applications or for those civil applications with a substantial volume capacity.

Because of the large increase in the price of fuel there is at present the tendency to apply calorimeters in addition to the large centralized thermal units for the heating of numerous buildings and also to the individual apartments of mansions in community habitation in order to distribute proportionally the cost of the consumption of fuel.    That is already possible at present using electronic calorimeters, centralizing possibly in one

0057804

suitable place all the total meters without accessibility to the users but with a non indifferent system of electrical connections of the heat gauges.

The possibility of application is nevertheless conditioned by the system with which the network of distribution of the heat has been realised in as much as it remains excluded by the possibility of measuring the majority of the building constructions for multiple habitations of non recent construction or all those which have not adopted the system of the distribution planned for zone or for apartments. In the actual case that the distribution has been carried out with supports of elements in parallel the measurement of the consumption of every compartment would result exclusively possible to the limit applying a measurer on every single heating radiator of each apartment. For the reasons set forth above a wide expansion of the possibility of application of the dynamic calorimeters is achieved involves the following presumptions of a technical nature: minimum dimensions, maximum mechanical simplicity, reduced cost, reliability, independence of source of external electricity.

It can be noted that the prior technology does not provide and does not teach how to realize a dynamic calorimeter which is materially applicable by it dimensions in a normal distribution box of the heating liquid disposed at the entrance to each apartment and usually shut up in the reduced thickness of a wall neither in as much as it is materially applicable on every element radiating from a same apartment nor that the same instrument totals likewise the numbers of the calories consumed without the aid of a station placed elsewhere and without being connected to the distribution network of the electric energy.

In addition the prior technology does not describe how the motion of a rotor can be transformed into electrical
impulses without using mechanical, nor optical nor magnetic
couplings in the variation, how it is possible to
nentralise the influx of external magnetic fields on the
internal magnetic coupling.  Likewise a dynamic electronic
calorimeter is not described which transforms a very small
part of the kinetic energy possessed by the fluid in it
passing through in electric energy which holds charged a
micro-accumulator necessary for the feeding of the
electronic "microcomputer" (incorporated in the same
mechanism) so that its memory of the labile type,
retains the data until the moment of the indicating same
even if there is verified an accidental fault in the
external electrical feeding.

A dynamic calorimeter which satisfies all the conditions
set forth in the foregoing is described in the following
and is the subject of the present application for a patent
conjointly with the attached sheets of drawings in which:-

Fig. 1 illustrates the external perspective view of the
calorimeter in question having dimensions comparable with
those of a normal "stop valve" of 3/4 inch (19mm) diameter
of the thread.

Fig. 2 illustrates how there can be realized inside the
base element a rotor with axle parallel to the flow in
order to carry out the measuring of the volume of the fluid
in movement.

Fig. 3 shows the feed transformer.

Fig. 4 illustrates diagrammatically the particular feature
of the system of transfomation of the rotary movement
of the rotor into electric impulses.

Fig. 5 shows a variation of the system of Fig. 3.

- 6 -

0057804

Fig. 6 shows the simplified section of the electro mechanical measuring instrument coupled to the processing and memory station in the variation with external display and recording.

Fig. 7 constitutes the block diagram of electronic station incorporated in the calorimeter and of its external portable reader.

Fig. 8 illustrates an outer possible aspect of the instrument integral with personalized "micro-computer" and display incorporated.

Fig. 9 illustrates the simplified section of the instrument in the variation with electro-mechanical impulse generator coupled to the station with personalized micro-computer and display incorporated.

Fig. 10 indicates diagrammatically the relative position between annular magnets, rotor and armature of the feeder of the micro-accumulator.

Fig. 11 is the electrical diagram of the feeder.

Fig. 12 constitutes the block diagram of the electronic station realized with personalized microcomputer.

Fig. 13 illustrates a possible variation with fan having axis of rotation perpendicular to the flow of liquid.

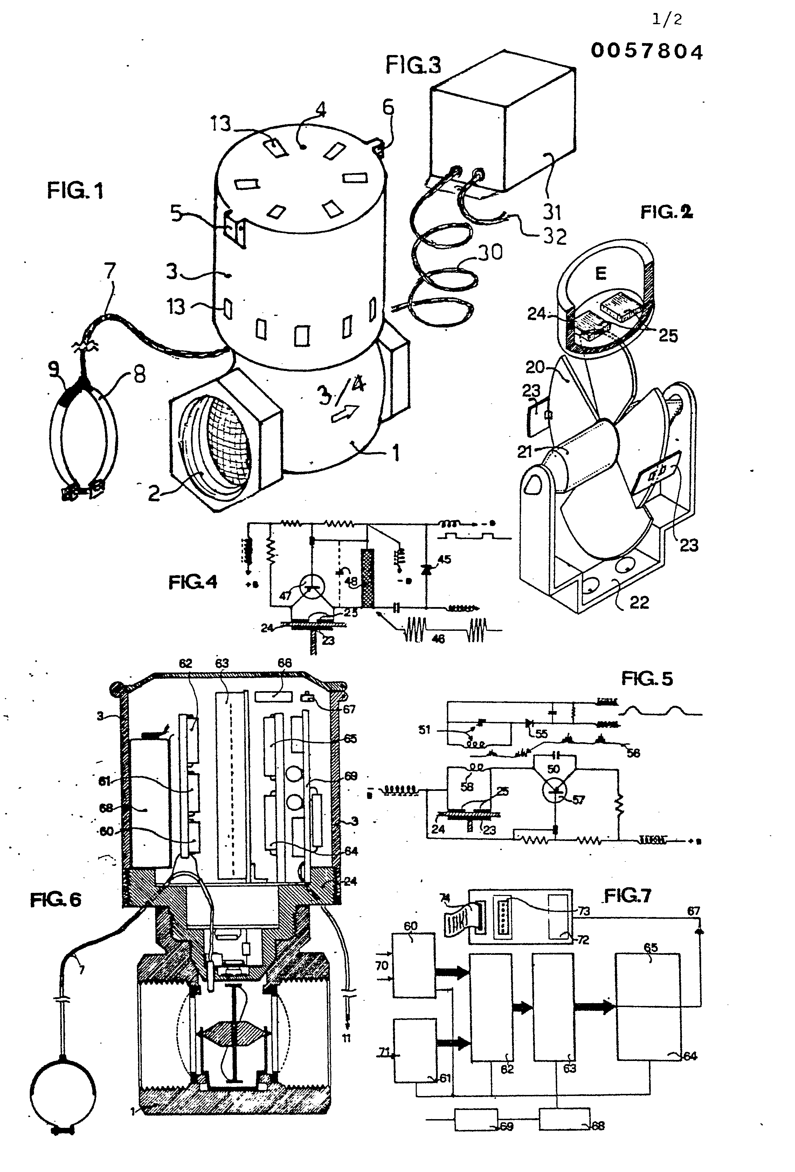

In Fig. 1 is shown the outer aspect of the whole assembly in the version with electronic station constituted by separate elements and with non incorporated feed transformers. This is realized with a mechanical body containing the rotor (preferably made of bronze) 1 and provided with screw thread 2 of 3/4 inch, the most widely used in domestic heating installations.

Perpendicularly to the direction of flow of the fluid is applied a second body 3 containing the electronic station.    This is closed by a lid 4 hinged at 5 and capable of being sealed in the closure position by means of bored spouts 6.   From the connection of the body 3 leaves a lead 7 which carries the collar 8 provided with a thermal sensor 9 and a second lead 30 for connection to the feed transformers 31 to be connected to the network by means of the lead 31.

In the solution by other diameters of tubes only the mechanical body 1 varies which may be of standardized dimensions with screw thread 2 for tubes of 1 inch;  1.1/4; 1.1/2 or of others according to necessity whilst the body 3 may remain of unvaried dimensions always containing the same electronic station.

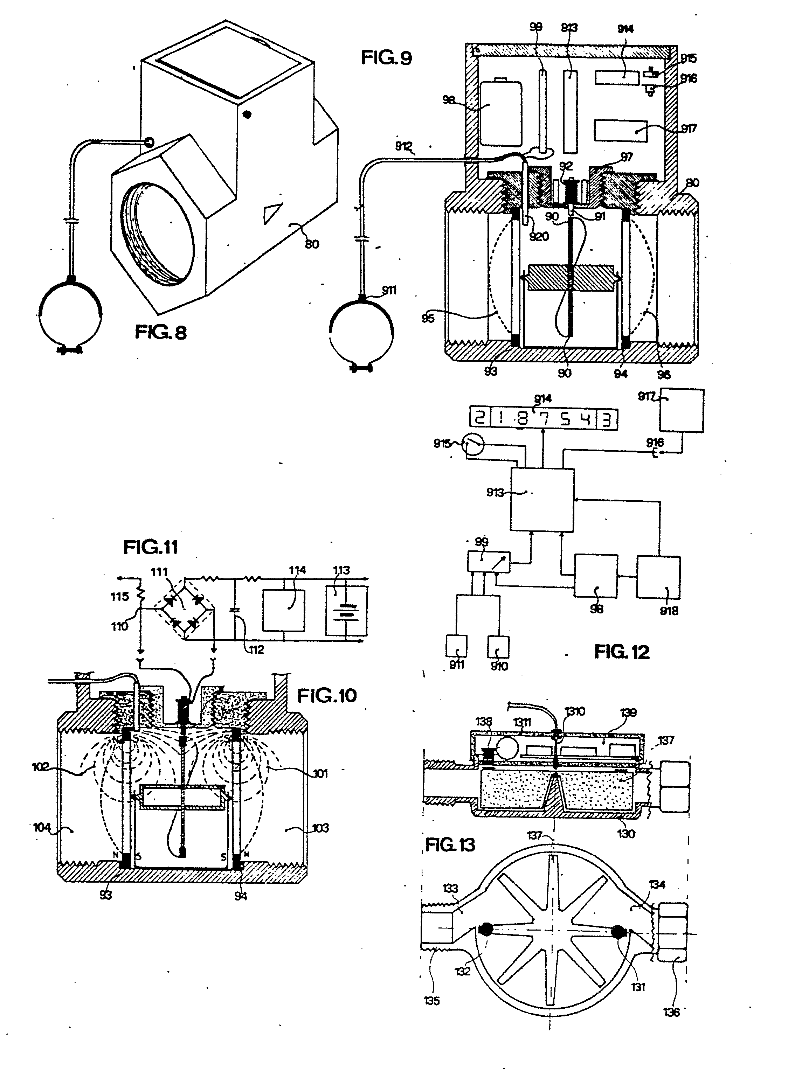

The bodies 1 and 3 are connected to one another with a block 24 (Figs. 2,6) of material with low coefficient of thermal transmission also if preferred the apparatus will be applied to the return conductor (cold side) of the thermovector liquid.   At the entrance of the tubes in an apartment there is normally a temperature of the vector liquid of $70^{o}C$ whilst at the  outlet it can vary substantially (average $30-40^{o}C$) as a function especially of the flowing speed of the fluid and of the exchange of heat effected by means of the radiating elements.

Besides the connection 24 thermally insulating the slits 13 with which the body 3 is provided and the lid 4 are provided to keep, by the possibility of ventilation, the electronic station at a temperature very near to that of the surrounding atmosphere ($20^{o}C$).

In Fig. 2 is illustrated the very simple constitution of the rotor 20 provided with an axle 21 supported by a moulded plate 22 preferably made of bronze.   The blades of the rotor which carry at least two small plates 23 are with the almost total closure of the section of the flow of the liquid so that it is compelled to rotate also with flows of very low intensity.

It is preferably made of polytetrafluoroethylene PTFE (softening temperature 200°C), a material with low specific weight, with high dielectric constant and low water supply.

The axle, for mechanical reasons, is constructed preferably of polyamide 11 and has the special feature that it is full of air or is hollowed out that is made hollow as much as necessary because the specific weight of the whole rotor equals that of the liquid in which it is immersed. In the case (almost generally) where the liquid is water the specific weight of the materials used are very close to what is required is easily obtained. This special constructional feature causes the rotor to rotate without pressing with its weight on the points reducing the abrasions to a negligible amount.

The wheel with 4 or more blades of slight thicknness (o.5 to 1mm) may be constructed together with half axle by means of thermoplastic injection in a mould provided with numerous impressions but preferably hollowed out with a sufficient precision with a much more economic tool and of easy construction constituted by two die stamps with 4 cutting cusps and perfect symmetry which carry out simultaneously the 4 cuts and the bending of the blades. A disc precut from a sheet preheated up to its Vicat grade with infrared lamp is used. After the cutting it remains pressed between the two die stamps until cooling so as to assure the final shape.

The wheel is expelled upon opening the tool. This contemporary cutting and moulding tool has the advantage of working discs of any diameter or may be unique for the whole series of fans necessary. For the mechanical body of 3/4 inch the diameter of the wheel of 22 millimeters has been found convenient whilst that of 1 inch a diameter of 28 mm with an inclination of the blades equal for both to 30 degrees sixty.

For the construction of the axle 21 carried out in two parts in the form of two small pointed capsules and hollow internally the system of the injection of the thermoplastic material fused in a metal mould bearing numerous impressions, a half mould for the male capsule and a half for the female. The connecting of the two semi axles to the fan is carried out conveniently with ultrasonic welding. With welding preferably ultrasonic the thin small plates 23 made of bronze are welded on the blades of the fan or in the variation already stated the fixed magnets 94 of Fig. 9 sintered magnetic ceramic having equal ratio weight/volume of the small plates. Internally on the bottom of the insulating body 24 are welded two small adjacent plates 25 which constitute the rheophores of the electronic condenser which then forms a small plate 23 appears on these beyond the insulation 24 which acts as a dielectric. The system of producing electrical impulses so as to permit the keeping of accounts by means of the electronic meter is illustrated diagrammatically in Fig. 4 and in the variation of Fig. 5. The impulses are drawn out correcting by means of the diode 45 and 55 respectively the train of waves 46-56 with radio frequency generated by the oscillator with transistors 47-57.

The frequency of oscillation is determined in predominant part by the values of the oscillating circuit 48-58 (inductor and condensor) whilst the capacity 49-59 of reaction is that which receiving energy in phase in agreement from the outlet to the inlet of the amplifier element (in this particular case a transistor) causes the oscillation to prime and transforms the circuit into a continuous oscillator with radio frequency. Establishing the value of the components in suitable manner can determine the frequency of oscillation more conveniently or vice versa. The frequency of oscillation of the circuit of Fig. 4 is selected close to that corresponding to the threshold of auto oscillation of the circuit by a known inductor or of that which may be primed by the appropriate reaction capacity of the transistor and of the parasite capacity. In this case in practice a working frequency between 600 and 800 $MH_z$ is obtained with a transistor of normal use; the inductor of the oscillating circuit 48 is a simple metal strip of about 1cm long by 0.3 wide. Doing this it is sufficient to apply the capacity of about 0.5pF as reaction to prime the oscillation r.f. This capacity is virtually applied every time the small metal plate 23 is located in front of the rheophores 25 of the reaction condenser (which normally has the negligible capacity of 0.05pF) due to the high value of the constant dielectric possessed by the separation wall 24 between the liquid and the electronic part two capacities in series of about 1pF (the total of which is precisely 0.5pF). With the rotation of the rotor a sequence of oscillation blocks 46 is produced having a cadence equal to the numbers of revolutions per second multiplied by the number of small plates applied to the said rotor. The current consumed by the oscillating circuit using transistors of small power is limited to 1 - 2 mA.

Considering the variation of Fig. 5 this may be selected to use an oscillator frequency lower than that corresponding to the limit of self-priming given by the parasite capacities. The reaction condenser 59 is applied fixed on the circuit and selected so that the oscillation remains permanent for a round of frequencies sufficiently large (for example, from 100 to 200 MHz). The inductors of the oscillating circuit 58 is applied directly to the two small plates 25 which as already seen have between them a residual capacity of 0.05pF.

When the small plate of the rotor is brought forward the capacity passes to the value of 0.5pF by which the frequency of oscillation is lowered instantaneously in value. By means of a connection in another oscillating circuit 51 enters in resonance with this new lower frequency transferring to the corrector diode 55 the oscillation 56 with r.f. which transforms them into inpulses (50) of cadence equal to that of the case already examined. The factor of merit of the circuit 51 must be as high as possible and the connection with the circuit 58 must not exceed the critical connection so that the selectivity of the transformer is such by which the variation of frequency caused by the passage of the small plates of the rotor is sufficient to produce a good difference in amplitude of signals on the detector diode.

The electronic station is illustrated in Fig. 6 and with block diagram in Fig. 7.

This is realized with elements of normal availability in the trade; or by means of an integrated circuit adjustable amplifier 60 in which is introduced from the inlet 70 the analogical data supplied by the thermal sensors, in the preferred case the sensors are a series of about ten thermocouples arranged in insulated and flexible cord 7, between the two points of control or by means of a differential amplifier there will be used two sensors of another kind.

The signals in the form of impulses 71 are introduced into a square 61 before passing to the digital analogical convertor 62 from which the analogical data coming from the amplifier 60 also pass.   The signal now transformed
into binary code are introduced into a microprocessor
63 containing the CPU (unit of calculation) which according
to the programme supplied to it by the single reading
memory (ROM) 64 feeds the memory with random access RAM65.
The results are read on the displayer 66 with luminous
numerals LEED or forwarded by means of an insertable plug
67 to the decoder 72 which pilots the external displayer
73 at the same time to the thermal writing means 74.

The battery of accumulators 68 preferably of nickel-cadmium
is kept in charge by means of a feed regulator unit 69
which receives the voltage usually alternating of low
voltage (about 10-12V) from the small transformer 11
Fig. 1 disposed externally.

As is easily seen the generator of electrical impulses
consumes a certain quantity of energy supplied from the
stabilized feeder with interchargeable electro chemical
accumulators placed in the body 3, Fig. 6.   For the
variation already stated and illustrated of the calorimeter
integral or containing also electrical feeding, the feeder
is carried out preferably with an electrochemical
accumulator of smaller capacity and of smaller voltage,
about 3v.

For such purpose the mechanical body 80 of Fig. 8 is also
reduced to a single block preferably of micro casting
in wax mixed with ferrous material or alloy with high
magnetic permeability no longer having to contain the
numerous constituent parts the electronic station carried
out with discreet elements and of normal requirements.
For the purpose of decreasing also the consumption of
electrical energy there is used in this variation a
personalized micro-processor (micro computer) and in this
case of low consumption (maximum $50\mu A$ to 3 volts) the
elctrical energy of recharge of the accumulator is obtained absorbing kinetic energy from the fluid in flow.   For such purpose as illustrated in fig. 9 the blades of the rotor carry fixed small magnetic cylinders rather than the small metal plates 23 of Fig. 2, magnetized in axial direction which pass in front and very close to the core 91 of material with high magentic permeability fitted in an inductor 92.

The rapid variation of the magentic flow in the core 91 induces an impulse of current of about semi-sinusoidal form in the inductor 92 and the amplitude of the alternating voltage obtained is according to the number of coils of the inductor and of the velocity of displacement of the permanent magent.

A small unit of energy in the form of impulses is taken from the point 110 of Fig. 11 representing the electrical diagram of the feeder to be conveyed to the micro-computer whilst the remaining after the rectifying operated by the bridge of diodes 111 goes to charge the condensor 112 and then as direct current charges the small accumulator 113 by means of a possible normal automatic stabilization and regulation network 114.   In this body 80 of Figs. 8 and 9 are likewise disposed two identical rings of permanent magents 93 and 94 and magentized in counter phase on the internal mouth of the two screw threaded connections.   Their fixed strong magentic field and of equal polarity is neutralized in correspondence with the central plane in which the magnets rotate by which they do not undergo action.   Such magentic field of which in Fig. 10 are drawn the lines of flux 101-102-103-104 performs mainly the function of attracting the possible ferrous impurities which might pass through suspended in the water especially those of dimensions so small that they could pass through the mechanical filters 95 and 96.   Such particles if not treated magnetically could, in time, accumulate on the rotating magnets throwing out of balance the rotor and creating undesirable abrasions.

In Fig. 9 is illustrated the reciprocal position of all the components of the integral calorimeter and in Fig. 12 the block diagram of its electronic part.

As is easily seen making a comparison with Fig. 7 the electronic station of Fig. 12 is much more simplified in as much as all the functions are incorporated in a micro-computer 913 of dimensions 14x14x2mm in which is personalized or rendered adapted only to the specific functions which it has to carry out in the calorimeter. In the hollowed out space of the mechanical block 80 on the upper side to the rotor it takes up a position in an insulating end piece 97 the inductor 92 and the components already described of the feeder. The electric accumulator 98 is displaced in a position accessible from outside to be able to be withdrawn easily. In the remaining space are located: an amplifier 99 in integrated circuit which is provided by means of its regulator to supply the data regarding the difference in temperature in the proportions by which the result displayed can be "rated" on every single piece conjointly with its specific thermal probes 910 and 911. The thermal probes may be constituted by "thermostats" or by thermoindicators diodes which consume less electrical power or preferably by a "thermo-couple" which does not consume current from the battery but on the contrary generates it.

The thermocouple preferrred is constituted by a lead 912 formed by about ten bifilar thermoelectric couples of variable length from 0.3m to 1 meter or more of insulated conductors made of copper and of Constantan (or of other metals which from a thermo-electric couple) disposed in series. One end of the lead comprises all the ends welded in couples and insulated from one another turns out to be introduced into the running liqud in the calorimeter (cold side) whilst the opposite side 911 comprises just as many insulated welds constitutes the probe to be applied adhering to the tube which leads to the hot liquid to the dissipator or radiator (hot side).  The two groups of welds when they are at different temperatures produce a difference of potential the sum of those of the single couples connected in series and a current propertional to $\Delta t$ which acts on the amplifier 99 already mentioned.

Assuming a number by way of example of 10 couples and a maximum jump in temperature from 20°C to 70°C or a $\Delta$ t50 the potential of each copper-Constantan couple being 42.8 microvolts at the heads of the series a voltage of 20mV is obtained.  The lead (912) in the greater part of the uses disposed in view and at ambient temperature and in order to impede its violation is covered besides by an electric insulation also by a covering of copper wires which prevents the introduction of heat and by a protective sheath.

The microprocessor or "microcomputer" (913) is programmed to carry out the multiplication between the number of rotations of the rotor and the aforesaid $\Delta t$ taking account of a prefixed factor of proportionality contains the two memories"RAM" and "ROM" (read only and random access) and commands directly without "interface" the numerals with liquid crystals of the viewer 914 plus 8 special symbols which serve to codify every calorimeter. A microcomputer base may be the model SAA6000 of the firm ITT programmable for the "consumer" by means of "masking". This consumes, fed with 3 volts, the negligible current of 0.045 mA when it is in operation.  A pulsator (915) renders visible the numerals only when it is set to make the reading.  A plug (916) renders possible the insertion of other types of external letters (917) with fixable data in the necessary case.  The feeders (918) sends the impulses to the microcomputer (913) and the feed current to the battery of
accumulators (98) which supplies the electric energy to the
amplifier and to the microcomputer.

The difference between the two variations first indicated
is not substantial as regards the generations are always
the same and the dimensions of the calerimeter not very
different.

The first variation having the electric centre and the
mechanical base constituted by discreet elements of normal
trade may be constructed in small series of pieces and
is therefore more accessible for a small immediate market.

The second variation especially for its electronic part
is adapted for a very large mass production as regards
cost and labour of the study of programming and the
carrying out of the "masking" tackle of the microcomputer
are justified only by this.

The various processings illustrated in the two variations
do not constitute two solutions  clearly divided into
two practical possibilities not invalidating the
intercharge of their functions the validity of the
invention.   In fact the possibility of realizing the
meter with discreet elements is logical introducing also
the viewer with luminous numerals which is if of the type
with liquid crystals absorb a negligible energy whilst if
they are of the type LEED can be illuminated only
occasionally pressing the opposite pulsator for the purpose
of the saving of electric energy (or better of power of the
feeder).

On the other hand rather than use an external feeder for
the solution with greater consumption (determined
especially by the micro-processor and by the two memories)
can be adopted also for it the generator with inductor and rotating magnets, taking care that the shape of the blades and of space of the body base in which they rotate are carried out with precision by which it is possible to take sufficient kinetic energy from the liuqid in movement even when the two speeds are reduced. The energy possessed by the liquid is in fact enormously greater than that substracted to feed the electronic station.

The eventuality that the viewer incorporated in the solution with microcomputer results unnecessary is logical when an external viewer and possibly provided with writer is preferred. In conclusion the two solutions illustrated are those of maximum and minimum not intending to reject those intermediate. The majority of meters of the volume of liquids in movement which are in common use in the trade contain a wheel with axis of rotation perpendicular to the direction of flow. A good part of these are realized with the mechanical totaller completely separate from the wheel section which works necessarily immersed in the liquid and the two sections are connected by means of a magnetic coupling as illustrated in Fig. 13.

The wheel 137 is made to rotate by the liquid which enters and leaves in tangential direction of the pipes 133 and 134 and carries on each blade the permanent magnetic discs for example 131 and 132. Taking away from the upper space 139 the wheel block of the totaller which as a rule is realized in an assembly capable of being unthreaded find convenient location all the elements of the electronic station previously illustrated its distinct summary is repeated here for greater clarity: the inductor 138 which provides for generating the electric impulses, the feeder, the battery of electric accumulators, the adjustable amplifier, the micro computer, the displayer with numerals with liquid crystals and other components of minor account besides at the end 1310 of the differntial thermal probe. This station is realized by the same exact dimensions of the wheel block and the numerals result equally legible through the transparent lid 1311.    The inlet and outlet hydraulic connections 135-136 are conveniently realized a male and the other female and also being here as in the preceding variations no matter the direction of circulation of the liquid the insertion of the calorimeter results otherwise facilitated.

CLAIMS

1)    A dynamic calorimeter taking up minimum space for liquids insertable with normal connections even in existing domestic and industrial pipes of small diameter employed for the conveyance of hot water or other fluids, characterised in that it contains a meter for the volume of fluid flowing in it (quantity) a transformer of these data into electrical pipelines, a differential heat gauge measuring the difference in temperature between the inlet and outlet of the fluid of the user or of the users and a digital processing centre of the analogical data of capacity and difference of temperature which supplies the results on a viewer preferably incorporated in the calorimeter itself.

2)    A calorimeter according to claim 1, characterised by a main body (1) provided with connections permitting of its insertion in the tubing passed through by the fluid, by an auxiliary body (3) containing a processor of the data with viewer and recorder of the results respectively, by a first heat gauge (9) connectable to the inlet conduit of the hot fluid for measuring the temperature before the user and users respectively; by a second heat gauge incorporated in the main body of the calorimeter inserted in the outlet pipe of the fluid by the said user and users respectively to measure the temperature of the fluid at the outlet; the said main body containing devices adapted to measure the quantity of the fluid passing into the said pipe.

3)    A dynamic calorimeter according to claim 2, characterised in that the said main body (1) contains a rotating member operated by the fluid which passes through it to measure the quantity whilst the auxiliary body (3) contains an electronic data processor operated by electric impulses generated by the rotation of this rotating member as a function of its angular velocity.

4)    A dynamic calorimeter according to claim 3, characterised in that some of the blades of the rotating members carry integral with the thin metal plates or metallic covering or electro conductors each forming a capacity when they pass in front of the rheostats (25) of the reaction condenser of an oscillating circuit with transister priming it or of the condensor in parallel with the inductor of a persistent oscillator with . transistor syntonizing it produce a train of waves with radio-frequency which rectified supply the impulses to the revolution counter proportional to the capacity the system not being capable of being influenced by accidental magnetic fields or applied on purpose from the outside.

5)    A dynamic calorimeter according to claims 2 and 3, characterised in that  the said electrical impulses are generated by permanent magnets integral with each blade of the rotating member and acting on a fixed inductor provided with a ferromagnetic core the said impulses being applied to a minimum extent to a micro computer which processes the values and being to the maximum extent transformed into direct current sufficient to maintain in charge an incorporated electrical micro accummulator which in its turn feeds all the elements of the electronic centre this latter coming into operation making use of the kinetic energy of the liquid flowing into the flow meter not requiring any supply from outside.

6)    A dynamic calorimeter according to claims 4 and 5 characterised in that the electronic processing of the analogical data received from the heat gauges and from the impulse generator conjointly with the analogical digital converter, the memories, the interface control, the viewer with LED numbers, the battery of accumulators with its rectifier are all integral and contained in the mechanical body provided with attachments for inserting on a pipe for liquids, the generator of the charging energy of the accumulator being outside and respectively also incorporated according to whether the electronic centre is constituted by the various elements of the type described listed above respectively by a single micro-computer  programmed and personalized for the consumption of energy not greater than 50 micro amperes X 5 volts piloting directly the viewer with numbers with liquid crystals.

7)    A dynamic calorimeter according to claims 1 to 6, characterised in that the rotating member preferably made by cutting and thermo moulding in polytetrafluoroethylene (PTFE) the blade being extended so as to close almost completely the discharge section of the liquid to be compelled to rotate with flow of very low intensity, has the Journal preferably made of polyamide 11 (PA) hollow internally so that the specific weight of the rotating member is equal to that of the liquid in order not to load the supports.

8)    A dynamic calorimeter according to claims 1 to 7, characterised by being constructed in a single mechanical body preferably by casting in ferrous metal or ferromagnetic alloy so as to prevent an influx of external magnetic fields and containing all the components necessary for its electrical feeding in addition to two permanent magnets disposed in counter phase so as to absorb from the fluid circulating in it all the ferrous dross carried along by the liquid.

9)    A dynamic calorimeter according to claims 1, 5, 6 and 8, characterised by being constructed using the mechanical body (130) of a normal volume meter of liquids of the type having the block of the wheels of the total meter working dry and coupled to the fan (rotor)
magnetically and by having the electronic centre located
in the space at the site of the wheels and a terminal
cf the heat gauge disposed inside the liquid pipe the
numerical value given by the viewer being observable
under the cover or readable with an outside viewer
provided with any writing means.

FIG. 1

FIG. 2

FIG. 3

FIG. 4

FIG. 5

FIG. 6

FIG. 7

FIG. 9

FIG. 8

FIG. 11

FIG. 10

FIG. 12

FIG. 13